# EUROPEAN PATENT APPLICATION

(11) **EP 1 381 166 A1**
(43) Date of publication of application: **14.01.2004**
(21) Application number: 02705214.1
(22) Date of filing: 14.03.2002
(51) Int. Cl.: H04B 1/44

(54) **COMPOSITE HIGH-FREQUENCY PART AND INFORMATION TERMINAL APPARATUS USING THE SAME**

(30) Priority: 27.03.2001 JP 2001089009
(71) Applicant: Sanyo Electric Co., Ltd., Moriguchi-shi, Osaka-fu 570-8677 (JP); Sanyo Electronic Components Co., Ltd., Daito-shi, Osaka 574-8534 (JP)
(72) Inventor: NITANI, Yasuo, Kobe-shi, Hyogo 650-0046 (JP); MIYAMOTO, Keizou, Daito-shi, Osaka 574-0054 (JP); KODAMA, Shinichi, Higashiosaka-shi, Osaka 578-0901 (JP); NAKAGAWA, Yuji, Daito-shi, Osaka 574-0043 (JP); FUJIURA, Hideaki, Toyonaka-shi, Osaka 560-0883 (JP)
(74) Representative: Wagner, Bernhard Peter
(86) International application number: PCT/JP2002/002451
(87) International publication number: WO 2002/078203

(57) **Abstract**

The invention provides a composite high-frequency part (10) decreased in the number of switching elements, usable in information terminal devices, compacted, reduced in power consumption and simplified in circuit, the composite high-frequency part (10) being adapted for transmitting and receiving a first signal and a second signal which are different in frequency band, the part comprising an antenna (12); a receiving unit (20) comprising a first receiving port Rx1 for receiving the first signal, a second receiving port Rx2 for receiving the second signal, and a diplexer (22) connected to the receiving ports for sorting signals into the first signal and the second signal; a transmitting unit (30) comprising a first transmitting port Tx1 for transmitting the first signal, a second transmitting port Tx2 for transmitting the second signal, and a diplexer (32) connected to the transmitting ports for combining the first signal and the second signal; and a switch (16) switchable so as to connect the diplexer of one of the transmitting unit (30) and the receiving unit (20) selectively to the antenna (12).

## Description

### TECHNICAL FIELD

The present invention relates to composite high-frequency parts for receiving signals in different frequency bands and to information terminal devices comprising the part.

### BACKGROUND ART

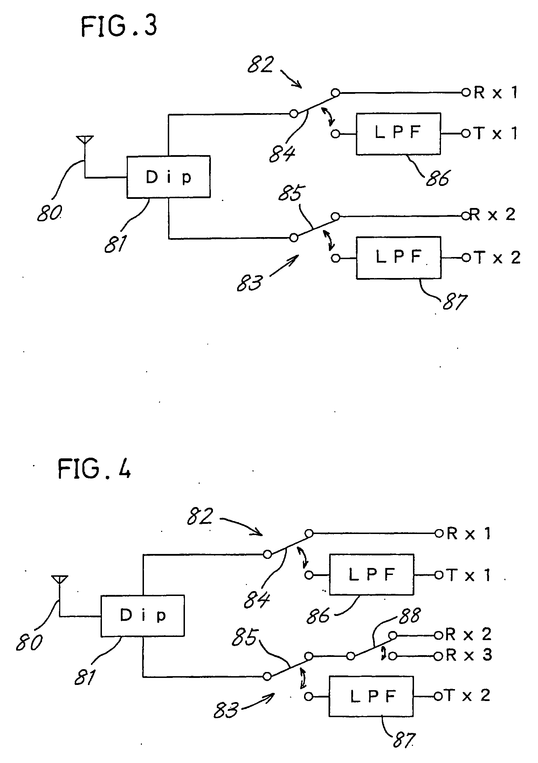

FIGS. 3 and 4 show circuits which are conventionally used as composite high-frequency parts for transmitting and receiving signals selectively in different frequency bands. The circuit shown in FIG. 3 is adapted to transmit and receive two kinds of signals, and the circuit shown in FIG. 4 is a circuit for transmitting and receiving three kinds of signals.

With reference to FIG. 3 to describe the circuit shown therein, a diplexer 81 is connected directly to an antenna 80 and has connected thereto a first transmitting-receiving unit 82 for transmitting and receiving a first signal and a second transmitting-receiving unit 83 for transmitting and receiving a second signal. The units 82, 83 have switching elements 84, 85, respectively. Connected to the switching element 84 for the first signal are a receiving port Rx1 and, via a low-pass filter 86, a transmitting port Tx1. Connected to the switching element 85 for the second signal are a receiving port Rx2 and, via a low-pass filter 87, a transmitting port Tx2.

When a signal is received, the diplexer 81 directs the signal according to the frequency band thereof to the first transmitting-receiving unit 82 or the second transmitting-receiving unit 83 for transmission. When the received signal is the first signal, the signal is transmitted to the first unit 82. When receiving the signal, the switching element 84 is changed over to the receiving port Rx1 with a control signal from an information terminal device, for the receiving port Rx1 to receive the signal. When the received signal is the second signal, the signal is similarly received by the receiving port Rx2.

When the first signal is to be transmitted, the switching element 84 is closed at the side of the transmitting port Tx1 with a control signal from the information terminal device, and the signal is input from the port Tx1 to the diplexer 81 and thereafter transmitted from the antenna 80. The same holds true for the transmission of the second signal.

The circuit shown in FIG. 4 is adapted to transmit and receive a first signal, and a second signal and a third signal which differ greatly from the first signal in frequency band but are close to each other in frequency band. The circuit comprises a first transmitting-receiving circuit unit 82, which is the same as the unit 82 in FIG. 3 and therefore will not be described again. A second transmitting-receiving unit 83 has a switching element 85 for a changeover between receiving and transmission, and a switching element 88 connected further to the element 85 and operable by a control signal from an information terminal device. When the second signal or third signal is to be received, the switching element 85 is closed for the receiving side, and the switching element 88 is further operated according to the frequency band of the signal to be received. The second signal or the third signal is transmitted to a receiving port Rx2 for the second signal or to a receiving port Rx3 for the third signal.

A transmitting port Tx2 serves in common for the second signal and the third signal and is connectable to the switching element 85 via a low-pass filter 87. The second or third signal is input to the diplexer 81, with the switching element 85 closed for the transmitting side, combined with the first signal in the diplexer 81 and thereafter transmitted from the antenna 80.

The circuits described above are used in information terminal devices such as portable telephones.

Examples of first to third signals for use in portable telephones are a first signal for GSM (global system for mobile communications) utilizing 900-MHz-band, for example, for use in Europe, a second signal for DCS (digital cellular system) utilizing 1800-MHz-band for use in Europe, and a third signal for PCS (personal communication services) utilizing 1900-MHz-band for use in North America.

The circuits described above require the switching elements 84, 85 or 84, 85, 88. Diode switches are generally used as the switching elements, whereas the diode switch can not be formed directly on a substrate by patterning and therefore needs to be mounted on the substrate. This makes the circuit complex and becomes an obstacle in compacting the circuit.

The circuits described above further have the problems of necessitating increased power consumption due to the control of the switching elements and an increased number of signals because control signals are used.

Additionally, there is a need to provide in the circuit means for isolating transmission and receiving from each other.

An object of the present invention is to provide a composite high-frequency part which is reduced in the number of switching components and which is compacted, reduced in power consumption and simplified in circuit for use in information terminal devices.

### DISCLOSURE OF THE INVENTION

To overcome the foregoing problems, the present invention provides a composite high-frequency part for use in transmitting and receiving a first signal and a second signal which are different in frequency band, the part comprising:
an antenna;
a receiving unit comprising a first receiving port Rx1 for receiving the first signal, a second receiving port Rx2 for receiving the second signal, and a diplexer connected to the receiving ports for sorting signals into the first signal and the second signal;
a transmitting unit comprising a first transmitting port Tx1 for transmitting the first signal, a second transmitting port Tx2 for transmitting the second signal, and a diplexer connected to the transmitting ports for combining the first signal and the second signal; and
a switch switchable so as to connect the diplexer of one of the transmitting unit and the receiving unit selectively to the antenna.

A changeover between signal transmission and signal receiving is effected by a switching element. For receiving signals, the switching element is closed for the receiving unit, while for transmitting signals, the switching element is closed for the transmitting unit.

The signals received by the antenna are transmitted to the receiving unit through the switching element. The receiving unit separates the received signals by the diplexer according to the frequency band of the signal and transmits the first signal to the first receiving port Rx1 and the second signal to the second receiving port Rx2.

For signal transmission, the first signal is input to the first transmitting port Tx1 and the second signal to the second transmitting port Tx2, the signals are combined and then transmitted from the antenna by way of the switching element.

According to the invention, only a changeover between signal transmission and signal receiving is effected by the switching element; so that there is no need for a switching operation for each of the different frequency bands. This reduces the number of control signals. Further a reduction in the number of switching elements permits a smaller number of components to be mounted on the substrate than conventionally to simplify the circuit.

Since the changeover between transmission and receiving is effected by the switching element in the close vicinity of the antenna, signals can be isolated from each other.

Thus, the composite high-frequency part of the invention is reduced in the number of control signals, simplified in circuit and compacted. Information terminal devices having the part installed therein can therefore be also compacted and reduced in power consumption.

### BRIEF DESCRIPTION OF THE DRAWINGS

FIG. 1 is a circuit block diagram of a composite high-frequency part of the invention for transmitting and receiving two kinds of signals.
FIG. 2 is a circuit block diagram of a composite high-frequency part of the invention for transmitting and receiving three kinds of signals.
FIG. 3 is a circuit block diagram of a conventional composite high-frequency part for transmitting and receiving two kinds of signals.
FIG. 4 is a circuit block diagram of a conventional composite high-frequency part for transmitting and receiving three kinds of signals.

### BEST MODE OF CARRYING OUT THE INVENTION

### [First Embodiment]

A description will be given of the construction of a composite high-frequency part for transmitting and receiving two kinds of signals which are different in frequency band.

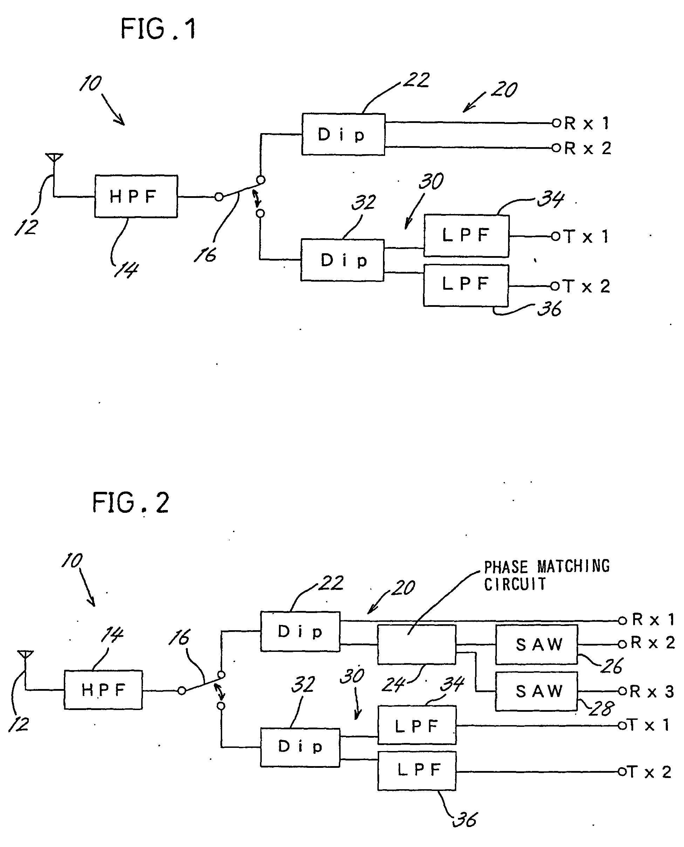

FIG. 1 is a block diagram showing an embodiment of composite high-frequency part 10 of the present invention. The part 10 of the invention is usable as a transmitting-receiving circuit in information terminal devices such as portable telephones.

With reference to the drawing, an antenna 12 is used for receiving signals from the outside and transmitting signals to the outside. The signals to be transmitted and received are a first signal and a second signal which are different in frequency band. For example, usable as the first signal is GSM signal, and as the second signal is DCS signal. Also usable as the first signal is TDMA800 and as the second signal is TDMA1900.

A switching element 16 is connected to the antenna 12 via a high-pass filter 14 serving as a measure against electrostatic discharge. The switching element 16 alternatively connects one of diplexers 22, 32 of the receiving unit 20 and transmitting unit 30 to be described below. The switching element 16 can be, for example, a diode switch. The switching element 16 is closed for connection to the receiving side or the transmitting side with a control signal from an information terminal device.

The receiving unit 20 comprises a first receiving port Rx1 for receiving the first signal, a second receiving port Rx2 for receiving the second signal, and the diplexer 22 connected to the receiving ports for sorting signals into the first signal and the second signal. The diplexer 22 is connected to the switching element 16.

The transmitting unit 30 comprises a first transmitting port Tx1 for transmitting the first signal, a second transmitting port Tx2 for transmitting the second signal, and a diplexer 32 connected to the transmitting ports Tx1, Tx2 via respective low-pass filters 34, 36 for combining the first signal and the second signal. The diplexer 32 is connected to the switching element 16.

When signals are to be received by the composite high-frequency part 10 of the above construction, the switching element 16 is closed for the receiving side with a control signal from the information terminal device.

The signals received by the antenna 12 are passed through the high-pass filter 14 and the switching element 16 and input to the diplexer 22 of the receiving unit 20. The diplexer 22 separates the signals into the first signal and the second signal according to the frequency band of the signal, transmitting the first signal to the first receiving port Rx1 and the second signal to the second receiving port Rx1.

Further when signals are to be transmitted, the switching element 16 is closed for the transmitting side with a control signal from the information terminal device.

The first signal and the second signal input from the respective transmitting ports Tx1, Tx2 are passed through the low-pass filters 34, 36 of the transmitting unit 30, combined in the diplexer 32 and transmitted from the antenna 12 through the switching element 16 and the high-pass filter 14.

The composite high-frequency part 10 thus constructed is adapted to transmit and receive two kinds of signals which are different in frequency band using one switching element 16. The diplexers 22, 32, high-pass filter 14 and low-pass filters 34, 36 can be formed on a layered ceramic substrate by patterning and permit facilitated circuit analysis.

Further because a changeover between transmission and receiving is effected in close proximity to the antenna 12, the individual signals can be isolated from each other.

### [Second Embodiment]

A description will be given of the construction of a composite high-frequency part for transmitting and receiving three kinds of signals which are different in frequency band.

FIG. 2 is a block diagram showing another embodiment of composite high-frequency part 10 of the present invention. The part 10 of the invention is usable also as a transmitting-receiving circuit in information terminal devices such as portable telephones.

With reference to the drawing, an antenna 12 is used for receiving signals from the outside and transmitting signals to the outside. The signals to be transmitted and received are a first signal, a second signal and a third signal which are different in frequency band. For example, usable as the first signal is GSM signal, as the second signal is DCS signal, and as the third signal is PCS signal.

A switching element 16 is connected to the antenna 12 via a high-pass filter 14 serving as a measure against electrostatic discharge. The switching element 16 alternatively connects one of diplexers 22, 32 of the receiving unit 20 and transmitting unit 30 to be described below. The switching element 16 can be, for example, a diode switch. The switching element 16 is closed for connection to the receiving side or the transmitting side with a control signal from an information terminal device.

The receiving unit 20 comprises a first receiving port Rx1 for receiving the first signal, a second receiving port Rx2 for receiving the second signal, and a third receiving port Rx3 for receiving the third signal. The second receiving port Rx2 and the third receiving port Rx3 are connected via respective band-pass filters (SAW filters) 26, 28 to a phase matching circuit 24. The phase matching circuit 24 and the first receiving port Rx1 are connected to the diplexer 22. The diplexer 22 is connected to the switching element 16.

The transmitting unit 30 comprises a first transmitting port Tx1 for transmitting the first signal, a second transmitting port Tx2 for transmitting the second signal and the third signal, and a diplexer 32 connected to the transmitting ports Tx1, Tx2 via respective low-pass filters 34, 36 for combining the first signal, the second signal and third signal. The diplexer 32 is connected to the switching element 16.

When signals are to be received by the composite high-frequency part 10 of the above construction, the switching element 16 is closed for the receiving side with a control signal from the information terminal device.

The signals received by the antenna 12 are passed through the high-pass filter 14 and the switching element 16 and input to the diplexer 22 of the receiving unit 20. The diplexer 22 sorts the signals into the first signal, the second signal and the third signal according to the frequency band of the signal, transmits the first signal to the first receiving port Rx1, and transmits the second and third signals through the phase matching circuit 24 and the SAW filter 26 or 28 to the second receiving port Rx2 and the third receiving port Rx3, respectively.

Further when signals are to be transmitted, the switching element 16 is closed for the transmitting side with a control signal from the information terminal device.

The first signal input from the transmitting port Tx1, and the second and third signals input from the transmitting port Tx2 are passed through the respective low-pass filters 34, 36 of the transmitting unit 30, combined in the diplexer 32 and transmitted from the antenna 12 through the switching element 16 and the high-pass filter 14.

The composite high-frequency part 10 thus constructed is adapted to transmit three kinds of signals which are different in frequency band using one switching element 16. The diplexers 22, 32, high-pass filter 14, low-pass filters 34, 36, phasematching circuit 24 and SAW filters 26, 28 can be formed on a layered ceramic substrate by patterning and permit facilitated circuit analysis.

Further because a changeover between transmission and receiving is effected in close proximity to the antenna 12, the individual signals can be isolated from one another.

The foregoing description of the embodiments are intended to illustrate the present invention and should not be construed as limiting the invention set forth in the appended claims or reducing the scope thereof. The part of the invention is not limited to the above embodiments but can be modified variously within the technical scope of the invention as set forth in the claims.

### INDUSTRIAL APPLICABILITY

As described above, the composite high-frequency part of the invention can be reduced in the number of control signals for transmitting and receiving signals, simplified in circuit and compacted. The part of the invention is usable as installed in information terminal devices to render the device compact and reduced in power consumption.

## Claims

1. A composite high-frequency part for use in transmitting and receiving a first signal and a second signal which are different in frequency band, the composite high-frequency part being **characterized by** comprising:
an antenna;
a receiving unit comprising a first receiving port Rx1 for receiving the first signal, a second receiving port Rx2 for receiving the second signal, and a diplexer connected to the receiving ports for sorting signals into the first signal and the second signal;
a transmitting unit comprising a first transmitting port Tx1 for transmitting the first signal, a second transmitting port Tx2 for transmitting the second signal, and a diplexer connected to the transmitting ports for combining the first signal and the second signal; and
a switch switchable so as to connect the diplexer of one of the transmitting unit and the receiving unit selectively to the antenna.

2. The composite high-frequency part according to claim 1 wherein the transmitting unit comprises a low-pass filter between the diplexer and each of the transmitting ports.

3. A composite high-frequency part for use in transmitting and receiving a first signal, a second signal and a third signal whicharedifferentinfrequencyband, thecompositehigh-frequency part being **characterized by** comprising:
an antenna;
a receiving unit comprising a first receiving port Rx1 for receiving the first signal, a second receiving port Rx2 for receiving the second signal, a third receiving port Rx3 for receiving the third signal, a phase matching circuit having connected thereto the second receiving port Rx2 and the third receiving port Rx3, and a diplexer having connected thereto the first receiving port Rx1 and the phase matching circuit for sorting signals into the first signal, second signal and the third signal;
a transmitting unit comprising a first transmitting port Tx1 for transmitting the first signal, a second transmitting port Tx2 for transmitting the second signal and the third signal, and a diplexer connected to the transmitting ports for combining the first to third signals; and
a switch switchable so as to connect the diplexer of one of the transmitting unit and the receiving unit selectively to the antenna.

4. The composite high-frequency part according to claim 3 wherein the receiving unit has a band-pass filter between the phase matching circuit and each of the second receiving port Rx2 and the third receiving port Rx3.

5. The composite high-frequency part according to claim 3 or 4 wherein the transmitting unit comprises a low-pass filter between the diplexer and each of the transmitting ports.

6. An information terminal device **characterized in that** a composite high-frequency part according to any one of claims 1 to 5 serves as a transmitting-receiving circuit.
